# NEUE EUROPÄISCHE PATENTSCHRIFT

(11) **EP 1 653 805 B2**
(45) Veröffentlichungstag und Bekanntmachung des Hinweises auf die Entscheidung über den Einspruch: **17.08.2011**
(45) Hinweis auf die Patenterteilung: 27.12.2006
(21) Anmeldenummer: 04763867.1
(22) Anmeldetag: 06.08.2004
(51) Int. Cl.: A01N 37/42, A01N 57/20, A01N 25/32

(54) **VERWENDUNG VON ACYLCYCLOHEXANDION-DERIVATEN ZUSAMMEN MIT ETHEPHON ZUR BEHANDLUNG VON KERNOBST**
USE OF ACYL CYCLOHEXANDIONE DERIVATIVES IN CONJUNCTION WITH ETHEPHON FOR TREATING POMACEOUS FRUIT
UTILISATION DE DERIVES D'ACYLCYCLOHEXANDIONE CONJOINTEMENT AVEC DE L'ETHEPHONE POUR DES POMACEES

(30) Priorität: 08.08.2003 DE 10336612
(43) Veröffentlichungstag der Anmeldung: 10.05.2006
(73) Patentinhaber: BASF SE, 67056 Ludwigshafen (DE)
(72) Erfinder: RADEMACHER, Wilhelm, 67117 Limburgerhof (DE)
(74) Vertreter: Reitstötter - Kinzebach
(86) Internationale Anmeldenummer: PCT/EP2004/008832
(87) Internationale Veröffentlichungsnummer: WO 2005/015997

(56) Entgegenhaltungen:
- EP-A- 0 509 562
- EP-A2- 0 434 613
- DE-A- 1 667 968
- GB-A- 1 597 686
- US-A- 4 361 436
- SUGAR ET AL.: 'Effects of prohexadione - calcium (Apogee) on blossoming,production, and fruit quality in pear' ACTA HORT 596 31 Dezember 2002, Seiten 757 - 760
- BYERS ET AL.: 'The influence of Apogee and its combinations with ethephon,chemical thinners, cations, and/or adjuvants for apple tree growth control and return bloom' PROCEEDINGS-PLANT GROWTH REGULATION SOCIETY OF AMERICA Bd. 27TH, 2000, Seiten 187 - 192
- ELFVING ET AL.: 'Prohexadine - Ca and ethephon reduce shoot growth and increase flowering in young, vigorous sweet cherry trees' HORTSCIENCE Bd. 38, Nr. 2, April 2003, Seiten 293 - 298
- KENDER: 'Ethephon - induced flowering in apple seedlings' HORTSCIENCE Bd. 9, Nr. 5, Oktober 1974, Seiten 444 - 445
- BYERS ET AL.: 'Controlling growth of bearing apple trees with ethephon' HORTSCIENCE Bd. 28, Nr. 11, November 1993, Seiten 1103 - 1105
- TROMP: 'Flower - bud formation in pome fruits as affected by fruit thinning' PLANT GROWTH REGULATION Bd. 31, 2000, Seiten 27 - 34

## Beschreibung

Die vorliegende Erfindung betrifft die Verwendung von Acylcyclohexandion-Derivaten zusammen mit Ethephon zur Behandlung von Kernobst.

Das Reduzieren eines übermäßigen Triebwachstums auf chemischem Wege, d. h. der Einsatz von Wachstumsregulatoren, ist bei Obst-Dauerkulturen erwünscht, da Schnittkosten gespart und Pflanzenschutzmaßnahmen erleichtert werden können und außerdem die Belichtung im Inneren des Bestands verbessert werden kann.

Sowohl Acylcyclohexandion-Derivate als auch Ethephon (2-Chlorethylphosphonsäure) sind bekannte Wachstumsregulatoren. So beschreiben sowohl die EP-A-123001 als auch die EP-A-126713 die Verwendung von Acylcyclohexandionverbindungen der allgemeinen Formel 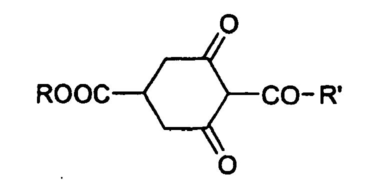 worin
R für Wasserstoff, Alkyl, Alkylthioalkyl oder gegebenenfalls substituiertes Phenyl steht und
R' für Alkyl, gegebenenfalls substituiertes Benzyl, Phenethyl, Phenoxymethyl, 2-Thienylmethyl, Alkoxymethyl oder Alkylthiomethyl steht,
oder Salzen davon als Wachstumsregulatoren.

L.J. Edgerton und W.J. Greenhalgh beschreiben in J. Amer. Soc. Hort. Sci. 94, S. 11-14 (1969) die wachstumsregulierende Wirkung von Ethephon auf Äpfel.

Die DE-A-1667968 beschreibt die Verwendung von Phosphonsäurederivaten, wie Ethephon, als Wachstumsregulatoren. Es wird ferner auch beschrieben, dass die Phosphonsäurederivate die Blütenbildung von damit behandelten Pflanzen auslösen oder verstärken können; allerdings zeigen die Beispiele, dass bei einigen Pflanzen die Behandlung mit Phosphonsäurederivaten zu einer Verringerung oder Verhinderung der Blütenbildung oder sogar zu einer Schädigung der bereits gebildeten Blüten führt.

Als nachteilig bei der Verwendung von Acylcyclohexandion-Derivaten zur Wachstumsregulierung hat sich erwiesen, dass bei bestimmten Pflanzen die Blütenbildung im Jahr nach der Behandlung und folglich auch die Fruchtbildung deutlich reduziert ist. So berichten D. Sugar, D.C. Elfving und E.A. Mielke in Acta Hort. 596, S. 757-760 (2002), dass die Behandlung von Birnbäumen mit Prohexadion-Calcium zu einer Verringerung der Folgeblüte führt. Versuche der Anmelderin haben diese Ergebnisse bestätigt und gezeigt, dass Wachstumsregulatoren auf Basis von Acylcyclohexandionen, insbesondere Prohexadion-Calcium und besonders stark Trinexapac bzw. Trinexapac-Ethyl, bei Kernobst und speziell bei Apfel und Birne zu einer deutlichen Reduktion der Blütenbildung im Jahr nach der Behandlung führt. Im Extremfall kann die Blütenbildung im Jahr nach der Behandlung sogar vollständig ausbleiben.

Die Behandlung führt nicht nur zu einer Reduktion der Folgeblüte und häufig damit verbunden zur Ertragsminderung im betreffenden Jahr, sondern kann auch Auslöser einer Alternanz sein. Alternanz bedeutet, dass auf ein Jahr mit zu geringen Erträgen ein Jahr mit zu hohen Erträgen meist niedriger Qualität folgt. Bei Obst-Dauerkulturen, wie Kernobst (Apfel, Birne, Quitte), Steinobst (Süß- und Sauerkirsche, Pflaume, Zwetschge, Pfirsisch, Nektarine, Aprikose, Mandel), Beerenobst (Stachelbeere, Johannisbeere, Himbeere, Brombeere), Schalenobst (Walnuss, Haselnuss, Pekannuss, Pistazie), Zitrus (Orange, Pampelmuse, Mandarine, Zitrone), Weinrebe, Feige, Kakipflaume, Kiwifrucht, Avocado, Mango, Litschi, Dattel und auch bei Kaffee und Kakao ist jedoch ein auf Dauer konstanter Ertrag ein wesentlicher wirtschaftlicher Faktor, so dass Schwankungen in Quantität und Qualität der Erzeugnisse möglichst vermieden werden müssen. Folglich ist eine durch chemische Wachstumsregulatoren induzierte Alternanz wirtschaftlich nicht hinnehmbar.

D.C. Elfving, G.A. Lang und D.B. Visser beschreiben in HortScience 38 (2), S. 293-298 (2003), dass bei bestimmten Kirschsorten die Behandlung der Bäume mit einer Kombination aus Prohexadion-Calcium und Ethephon zu einer erhöhten Blütendichte und gleichzeitig zu einer vegetativen Wachstumsverringerung führt. Eine Blütenreduktion im Folgejahr nach der Behandlung mit Prohexadion-Calcium alleine wird hingegen nicht berichtet.

Aufgabe der vorliegenden Erfindung war es, eine wachstumsregulierende Zusammensetzung zur Behandlung von Kernobst bereitzustellen, welche das vegetative Wachstum verringert und gleichzeitig die Blütenbildung nach der Behandlung nicht wesentlich reduziert.

Überraschenderweise wurde gefunden, dass Ethephon die Reduktion der Blütenbildung, die bei Kernobst nach der Behandlung mit bestimmten Acylcyclohexandion-Derivaten auftritt, verhindert. Die Aufgabe wurde daher durch die gemeinsame Verwendung von Acylcyclohexandion-Derivaten und Ethephon gelöst.

Gegenstand der vorliegenden Erfindung ist folglich die Verwendung wenigstens einer Verbindung der Formel I 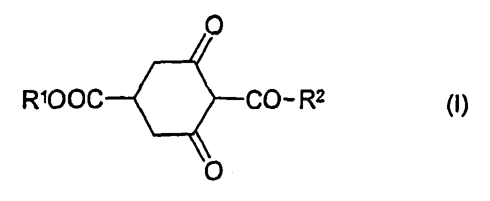 worin
- R¹: für H oder C₁-C₁₀-Alkyl steht und
- R²: für C₁-C₁₀-Alkyl oder C₃-C₁₀-Cycloalkyl steht,
oder Salzen davon
zusammen mit 2-Chlorethylphosphonsäure (Ethephon) der Formel II 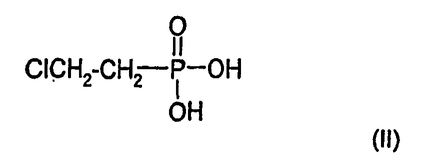 zur Behandlung von Kernobst, zur Verhinderung der durch die Behandlung mit Acyclcyclohexandion-Derivaten der Formel I in Kernobst beobachteten Blütenreduktion und einer durch die Behandlung eventuell induzierten Alternanz.

Unter Kernobst versteht man im Rahmen der vorliegenden Erfindung Apfel, Birne oder Quitte, insbesondere Apfel oder Birne. Mit der Bezeichnung Kernobst bzw. spezifiziert als Apfel, Birne oder Quitte sind die Obstbäume oder Pflanzenteile davon, hingegen nicht das Obst in geernteter Form gemeint.

Die Behandlung erfolgt zur vollständigen oder zumindest teilweisen Verhinderung derjenigen Blütenverringerung, die auf die Behandlung mit Acylcyclohexandion-Derivaten zurückzuführen ist. Gleichzeitig soll die Behandlung selbstverständlich zu einer Verringerung des vegetativen Wachstums führen. "Ganz oder teilweise verhinderte Blütenverringerung" bedeutet, dass erfindungsgemäß behandelte Pflanzen zu einem bestimmten Zeitpunkt oder in der gesamten saisonalen Blühzeit vorzugsweise wenigstens 40 %, besonders bevorzugt wenigstens 60 % und insbesondere wenigstens 80 % der Anzahl an Blüten oder alternativ der Anzahl der Blütenstände von unbehandelten, d.h. nicht mit Wachstumsregulatoren behandelten, aber ansonsten gleichen Bedingungen ausgesetzten Kontrollpflanzen aufweisen. Der Blütenstand (Infloreszenz) ist Teil des Sprosssytems vieler Samenpflanzen, wie Kernobst, welcher in der Regel mehrere Blüten trägt und später eine oder mehrere Früchte ergibt.

Eine teilweise oder vollständige Verhinderung der Blütenverringerung ist auch dann gegeben, wenn die erfindungsgemäß behandelten Pflanzen signifikant mehr Blüten oder alternativ Blütenstände zu einem bestimmten Zeitpunkt oder in der gesamten saisonalen Blühzeit aufweisen als Pflanzen, die ansonsten gleichen Bedingungen ausgesetzt waren, die jedoch ausschließlich mit Acyclcyclohexandion-Derivaten, d. h. ohne Ethephon, behandelt wurden.

Acylcyclohexandionverbindungen der Formel I sind aus der EP-A 0 123 001 und aus der EP-A 126 713 bekannt.

Die Verbindungen der Formel I können sowohl in der Trionform (Triketo-Form) I.a als auch in den tautomeren Keto-Enol-Formen I.b bzw. I.c vorliegen:

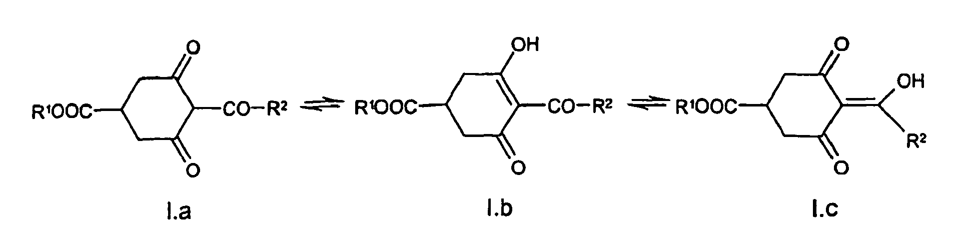

In den Verbindungen der Formel I steht R¹ vorzugsweise für H oder C₁-C₄-Alkyl.

R² steht vorzugsweise für C₁-C₄-Alkyl oder C₃-C₆-Cycloalkyl und insbesondere für Ethyl oder Cyclopropyl.

In der Definition der Reste R¹ und R² steht C₁-C₁₀-Alkyl für einen linearen oder verzweigten Alkylrest, wie Methyl, Ethyl, Propyl, Isopropyl, n-Butyl, sec-Butyl, Isobutyl, tert-Butyl, Pentyl, Neopentyl, Hexyl, Heptyl, Octyl, 2-Ethylhexyl, Nonyl oder Decyl. C₁-C₄-Alkyl steht beispielsweise für Methyl, Ethyl, Propyl, Isopropyl, n-Butyl, sec-Butyl, Isobutyl oder tert-Butyl. Vorzugsweise ist der Alkylrest linear.

In der Definition von R² steht C₃-C₁₀-Cycloalkyl beispielsweise für Cyclopropyl, Cyclopentyl, Cyclohexyl, Cycloheptyl, Cyclooctyl, Cyclodecyl oder Decalin. C₃-C₆-Cycloalkyl steht beispielsweise für Cyclopropyl, Cyclopentyl oder Cyclohexyl.

Bei den Salzen der Acylcyclohexandionverbindungen 1 mit R¹ ≠H handelt es sich um die Salze von Monoanionen, während es sich im Falle von R¹ = H sowohl um die Salze der Mono- als auch der Dianionen dieser Verbindungen handeln kann. Die Monoanionen können sowohl als Carboxylatanionen I.d als auch als Enolatanionen I.e bzw. I.f vorliegen: 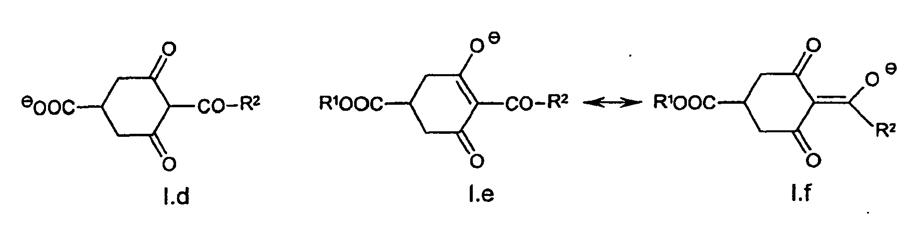 Im Dianion liegen entsprechend die Carboxylat- und die Enolat-Gruppen nebeneinander vor.

Bevorzugte Kationen in den Salzen der Verbindungen der Formel 1 sind die lonen der Alkalimetalle, vorzugsweise des Lithiums, Natriums und Kaliums, der Erdalkalimetalle, vorzugsweise des Calciums und Magnesiums, und der Übergangsmetalle, vorzugsweise des Mangans, Kupfers, Zinks und Eisens, weiterhin Ammonium (NH₄⁺) und substituiertes Ammonium, worin ein bis vier Wasserstoffatome durch C₁-C₄-Alkyl, Hydroxy-C₁-C₄-alkyl, C₁-C₄-Alkoxy-C₁-C₄-alkyl, Hydroxy-C₁-C₄-alkoxy-C₁-C₄-alkyl, Phenyl oder Benzyl ersetzt sind, vorzugsweise Ammonium, Methylammonium, Isopropylammonium, Dimethylammonium, Düsopropylammonium, Trimethylammonium, Tetrame-thylammonium, Tetraethylammonium, Tetrabutylammonium, 2-Hydroxyethylammonium, 2-(2-Hydroxyeth-1-oxy)eth-1-ylammonium, Di(2-hydroxyeth-1-yl)ammonium, Benzyltrimethylammonium, Benzyltriethylammonium, des weiteren Phosphoniumionen, Sulfoniumionen, vorzugsweise Tri(C₁-C₄-alkyl)sulfonium wie Trimethylsulfonium und Sulfoxoniumionen, vorzugsweise Tri(C₁-C₄-alkyl)sulfoxonium. Bevorzugte Kationen sind außerdem Chlormequat [(2-Chlorethyl)trimethylammonium], Mepiquat (N,N-Dimethylpiperidinium) und N,N-Dimethylmorpholinium. Besonders bevorzugte Kationen sind die Alkalimetallkationen, die Erdalkalimetallkationen und das Ammoniumkation (NH₄⁺). Insbesondere handelt es sich um das Calciumsalz.

Im Rahmen der vorliegenden Erfindung bezieht sich die Bezeichnung "Verbindungen der Formel I" bzw: "Acylcyclohexandion der Formel I" sowohl auf die neutralen Verbindungen I als auch auf deren Salze.

Besonders bevorzugt erfindungsgemäß verwendete Verbindungen I sind Prohexadion (R¹ = H, R² = Ethyl), Prohexadion-Calcium (Calcium-Salz von Prohexadion), Trinexapac (R¹ = H, R² = Cyclopropyl) und Trinexapac-Ethyl (R¹ = Ethyl, R² = Cyclopropyl).

Die Behandlung von Kernobst erfolgt vorzugsweise so, dass der Kernobst-Baum bzw. Pflanzenteile davon mit wenigstens einer Acylcyclohexandion-Verbindung I und Ethephon in Kontakt gebracht werden. Die Verbindungen der Formel I und Ethephon können im Gemisch oder getrennt appliziert werden. Bei der getrennten Anwendung kann die Applikation der einzelnen Wirksubstanzen gleichzeitig oder nacheinander erfolgen, wobei sie bei der sukzessiven Applikation vorzugsweise in einem zeitlichen Abstand von wenigen Stunden bis mehreren Wochen erfolgt.

Die Verbindungen 1 und Ethephon werden in einem Gewichtsverhältnis von vorzugsweise 10:1 bis 1:5, besonders bevorzugt von 5:1 bis 1:3, insbesondere von 3:1 bis 1:2, eingesetzt.

Die Verbindungen der Formel I bzw. ihre Salze werden pro Saison vorzugsweise in einer Aufwandmenge von 25 bis 1.500 g/ha, besonders bevorzugt von 50 bis 1.000 g/ha eingesetzt. Prohexadion-Calcium wird insbesondere in einer Aufwandmenge von 100 bis 500 g/ha pro Saison eingesetzt. Trinexapac-Ethyl wird pro Saison in einer Aufwandmenge von insbesondere 200 bis 800 g/ha eingesetzt. Ethephon wird vorzugsweise in einer Aufwandmenge von 25 bis 1.500 g/ha, besonders bevorzugt von 50 bis 750 g/ha und insbesondere von 100 bis 500 g/ha pro Saison eingesetzt.

Pro Saison werden die Wirksubstanzen vorzugsweise 1 bis 5 mal, besonders bevorzugt 1 bis 4 mal und insbesondere 2 bis 3 mal appliziert.

Es ist möglich, bei nur einem Teil der Applikationen die Verbindung der Formel 1 zusammen mit Ethephon einzusetzen und bei den restlichen Applikationen nur eine der Wirksubstanzen, insbesondere die Verbindung 1, zu verwenden. Vorzugsweise verwendet man bei wenigstens der Hälfte der Applikationen pro Saison, besonders bevorzugt bei der Hälfte der Applikationen pro Saison und insbesondere bei wenigstens einer Applikation sowohl Verbindung I als auch Ethephon.

Die Anwendungstermine, die Anzahl der Applikationen und die speziell eingesetzten Aufwandmengen hängen dabei von der jeweiligen Obstkultur und von weiteren Parametern, wie Obstart und -sorte, Unterlage, Alter, Witterungsverlauf, Verfügbarkeit von Wasser und Nährstoffen, ab und müssen im Einzelfall vom Fachmann festgelegt werden.

Vorzugsweise erfolgt die Applikation auf der nördlichen Erdhalbkugel im Frühjahr bis in den Frühsommer (ca. Anfang März bis Ende Juli) und auf der südlichen Hemisphäre entsprechend von Anfang September bis Ende Januar. Die Behandlung erfolgt insbesondere zum Beginn des neuen Triebwachstums, ein Termin, der in der Regel mit dem Ende der Blüte korreliert, oder zeitnah zu diesem Termin, d. h. innerhalb von ± 4. Wochen. Weitere Behandlungen können dann in einem Zeitraum bis 10 Wochen, z. B. innerhalb 1 bis 10 Wochen nach der ersten Anwendung, folgen. Die Behandlungstermine richten sich nach den jeweiligen Erfordernissen der Kulturpflanzen, die je nach Witterung und Standortbedingungen von Saison zu Saison verschieden sein können. Die Behandlungstermine kann ein Fachmann jedoch in üblicher Weise ermitteln, wobei auch Behandlungstermine außerhalb der hier angegebenen Zeiträume in der Regel zum Erfolg führen und je nach Erfordernis der Kulturpflanze sinnvoll sein können.

Die Verbindungen der Formel I, Ethephon bzw. ihr Gemisch werden typischerweise als Formulierungen eingesetzt, wie sie im Bereich des Pflanzenschutzes üblich sind.

Sie können beispielsweise in Form von konzentrierten Lösungen, Suspensionen oder Emulsionen mit Wasser verdünnt werden und durch Versprühen angewendet werden. Die Anwendungsformen richten sich nach der Kernobstart und -sorte bzw. dem Pflanzenteil, auf den appliziert werden soll; sie sollten in jedem Fall eine möglichst feine Verteilung der Wirk- und Hilfsstoffe erlauben.

Die Formulierungen können neben den Verbindungen der Formel I und/oder Ethephon für die Formulierung von Pflanzenschutzmitteln übliche Formulierungshilfsstoffe, z. B. inerte Hilfsstoffe und/oder oberflächenaktive Substanzen, wie Emulgatoren, Dispergiermittel, Netzmittel und dergleichen, enthalten.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole sowie von Fettalkoholglykolethern, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxypropylenalkylether, Laurylalkoholpolyglykoletheracetat, Sorbitester, Lignin-Sulfitablaugen, Methylcellulose oder Siloxane in Betracht. Geeignete Siloxane sind beipsielsweise Polyetherpolymethylsiloxan-Copolymere, die auch als "Spreader" oder "Penetratoren" bezeichnet werden.

Als inerte Formulierungshilfsstoffe kommen im Wesentlichen in Betracht: Mineralölfraktionen von mittlerem bis hohem Siedepunkt wie Kerosin und Dieselöl, ferner Kohlenteeröle sowie Öle pflanzlichen oder tierischen Ursprungs, aliphatische, cyclische und aromatische Kohlenwasserstoffe, z.B. Paraffine, Tetrahydronaphthalin, alkylierte Naphthaline und deren Derivate, alkylierte Benzole und deren Derivate, Alkohole wie Methanol, Ethanol, Propanol, Butanol und Cyclohexanol, Ketone wie Cyclohexanon, stark polare Lösungsmittel, z.B. Amine wie N-Methylpyrrolidon und Wasser.

Wässrige Anwendungsformen der Verbindungen 1, von Ethephon bzw. ihres Gemischs können aus Lagerformulierungen, wie Emulsionskonzentraten, Suspensionen, Pasten, netzbaren Pulvern oder wasserdispergierbaren Granulaten, durch Zusatz von Wasser bereitet werden. Zur Herstellung von Emulsionen, Pasten oder Öldispersionen können die Verbindungen der Formel 1 bzw. Ethephon bzw. ihr Gemisch, als solche oder in einem Öl oder Lösungsmittel gelöst und mittels Netz-, Haft-, Dispergier- oder Emulgiermittel in Wasser homogenisiert werden. Es versteht sich von selbst, dass die Anwendungsformen die in den Lagerformulierungen verwendeten Hilfsstoffe enthalten.

In einer bevorzugten Ausführungsform verwendet man die Verbindungen der Formel 1, Ethephon bzw. ihr Gemisch in Form einer wässrigen Spritzbrühe. Diese enthält die Verbindungen der Formel I bzw. Ethephon in einer Menge von vorzugsweise jeweils 25 bis 500 ppm. Werden die Verbindungen der Formel I und Ethephon als Gemisch eingesetzt, so enthält die Spritzbrühe die Wirksubstanzen in einer Gesamtmenge von vorzugsweise 50 bis 1000 ppm.

Die erfindungsgemäß verwendete Wirkstoffkombination aus Acylcyclohexandionen I und Ethephon ist für eine Applikation bei allen der vorstehend genannten Kernobstarten, aber auch bei davon verschiedenen Pflanzenarten anwendbar. Sie kann in Abhängigkeit vom Pflanzenteil, auf den appliziert werden soll, mit an sich bekannten und in der landwirtschaftlichen Praxis üblichen Geräten appliziert werden, wobei die Applikation in Form einer wässrigen Spritzlösung oder Spritzbrühe bevorzugt ist.

Die Applikation erfolgt vorzugsweise durch Spritzen bis zur Tropfnässe. Dabei wird entweder auf den gesamten oberirdischen Pflanzenteil oder aber nur auf einzelne Pflanzenteile, wie Blüten, Blätter oder einzelne Triebe, appliziert. Die Wahl der einzelnen Pflanzenteile, auf die appliziert werden soll, hängt von der Pflanzenart und ihrem Entwicklungsstadium ab. Bevorzugt wird auf den gesamten oberirdischen Pflanzenteil appliziert.

Ein weiterer Gegenstand der vorliegenden Erfindung ist ein Verfahren zur Behandlung von Kernobst zur Verhinderung der durch die Behandlung mit Verbindungen der Formel I im Jahr nach der Behandlung beobachteten Blütenreduktion und einer durch die Behandlung eventuell induzierten Alternanz, dadurch gekennzeichnet, dass man wenigstens eine Verbindung der Formel I und 2-Chlorethylphosphonsäure im Gemisch oder getrennt, gleichzeitig oder nacheinander in Form einer wässrigen Spritzbrühe auf Kernobst-Pflanzen oder -Pflanzenteile aufbringt.

Die vorstehend gemachten Ausführungen bezüglich der Verbindungen der Formel 1 und Ethephon, der wässrigen Zusammensetzung sowie der Applikation gelten hier entsprechend.

Durch die erfindungsgemäße Verwendung von Acylcyclohexandion-Verbindungen I zusammen mit Ethephon wird die auf die Behandlung mit bestimmten Acylcyclohexandion-Derivaten zurückzuführende Verringerung der Blütenbildung im Wesentlichen verhindert. Gleichzeitig erfolgt bei den behandelten Pflanzen die gewünschte Wachstumsregulierung.

Die nachfolgenden Beispiele sollen die Erfindung veranschaulichen, ohne sie jedoch einzuschränken.

### Beispiele:

### 1. Blühverhalten bei Birne nach der Behandlung mit Prohexadion-Calcium und Ethephon

12 Jahre alte Birnbäume der Sorte "Conference" auf Unterlage BA wurden an zwei unterschiedlichen Standorten zum einen mit Prohexadion-Calcium alleine und zum anderen mit einer Kombination aus Prohexadion-Calcium und Ethephon behandelt. Hierfür wurden jeweils 4 Gruppen von 5 Bäumen, die in einer Obstanlage gleichmäßig verteilt waren, mit einer wirkstoffhaltigen Spritzbrühe bis zur Tropfnässe besprüht (ca. 1000 I/ha). Am ersten Standort wurden drei Applikationen im Abstand von ungefähr einem Monat vorgenommen. Am zweiten Standort wurde Prohexadion-Calcium bei einem Teil der Baumgruppen viermal und bei einem davon verschiedenen Teil dreimal appliziert, wobei das Applikationsintervall etwa je zwei Wochen betrug. Die Kombination aus Prohexadion-Calcium und Ethephon wurde zweimal appliziert, wobei vor und nach der kombinierten Applikation jeweils eine Applikation mit Prohexadion-Calcium alleine erfolgte. Etwa ein Jahr nach der ersten Applikation wurde die Anzahl der Blütenstände von unbehandelten Bäumen, von solchen, die ausschließlich mit Prohexadion-Calcium behandelt worden waren und von Bäumen, die mit einer Kombination aus Prohexadion-Calcium und Ethephon behandelt worden waren, gezählt und miteinander verglichen. Die Ergebnisse sind in nachfolgenden Tabellen 1 und 2 aufgeführt.

**Tabelle 1: Standort 1**

| Behandlung | Applikationszeitpunkte 2002 und Aufwandmengen an aktiver Substanz [g/ha] | | | Gesamtdosis [g/ha] | Blüte im Folgejahr [Anzahl der Blütenstände/Baum] April 2003 |
|---|---|---|---|---|---|
| | 15. April | 14. Mai | 16. Juni | | |
| Unbehandelt | - | - | - | - | 183 |
| ProCa* | 150 | 150 | 150 | 450 | 137 |
| ProCa* + | 150 | 150 | 150 | 450 | 185 |
| Ethephon | 120 | 120 | 120 | 360 | |

**Tabelle 2: Standort 2**

| Behandlung | Applikationszeitpunkte 2002 und Aufwandmengen an aktiver Substanz [g/ha] | | | | Gesamtdosis [g/ha] | Blüte im Folgejahr [Anzahl der Blütenstände/Baum] April 2003 |
|---|---|---|---|---|---|---|
| | 12. April | 03. Mai | 15. Mai | 30. Mai | | |
| Unbehandelt | - | - | - | - | - | 250 |
| ProCa* | 120 | 87 | 87 | 95 | 389 | 157 |
| ProCa* | 120 | 87 | 87 | - | 294 | 152 |
| ProCa*+ | 120 | 110 | 92 | 95 | 417 | 217 |
| Ethephon | - | 395 | 315 | - | 710 | |

| | | | | | | |
|---|---|---|---|---|---|---|
| * Prohexadion-Calcium | | | | | | |

Wie die obigen Versuchsergebnisse zeigen, führt die Anwendung von Prohexadion-Calcium zu einer verringerten Blütenbildung im Folgejahr der Behandlung. Wird hingegen Prohexadion-Calcium in Kombination mit Ethephon appliziert, so bleibt diese Blütenreduktion aus oder wird deutlich abgemildert.

## Patentansprüche

1. Verwendung wenigstens einer Verbindung der Formel I 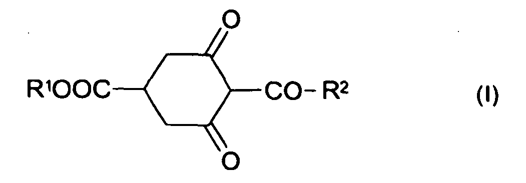 worin
R¹ für H oder C₁-C₁₀-Alkyl steht und
R² für C₁-C₁₀-Alkyl oder C₃-C₁₀-Cycloalkyl steht,
oder Salzen davon zusammen mit 2-Chlorethylphosphonsäure (Ethephon) zur Behandlung von Kernobst zur Verhinderung der durch die Behandlung mit Verbindungen der Formel I im Jahr nach der Behandlung beobachteten Blütenreduktion und einer durch die Behandlung eventuell induzierten Alternanz.

2. Verwendung nach Anspruch 1 zur Behandlung von Apfel oder Birne.

3. Verwendung nach einem der vorhergehenden Ansprüche, wobei in der Verbindung der Formel I R¹ für H und R² für Ethyl steht oder wobei die Verbindung der Formel I, in der R² für Ethyl steht, in Form des Calciumsalzes vorliegt.

4. Verwendung nach einem der Ansprüche 1 oder 2, wobei in der Verbindung der Formel I R¹ für Ethyl und R² für Cyclopropyl steht.

5. Verwendung nach einem der vorhergehenden Ansprüche, wobei die Verbindung der Formel I und 2-Chlorethylphosphonsäure in einem Gewichtsverhältnis von 10:1 bis 1:5 eingesetzt werden.

6. Verwendung nach einem der vorhergehenden Ansprüche, wobei die Verbindung der Formel I und 2-Chlorethylphosphonsäure im Gemisch in Form einer wässrigen Spritzbrühe eingesetzt werden, in welcher die Verbindung der Formel I und 2-Chlorethylphosphonsäure in einer Gesamtmenge von 50 bis 1000 ppm enthalten sind.

7. Verwendung nach einem der vorhergehenden Ansprüche, wobei die Aufwandmenge der Verbindung der Formel I und von 2-Chlorethylphosphonsäure im Bereich von jeweils 25 bis 1500 g/ha pro Saison liegt.

8. Verfahren zur Behandlung von Kernobst zur Verhinderung der durch die Behandlung mit Verbindungen der Formel I im Jahr nach der Behandlung beobachteten Blütenreduktion und einer durch die Behandlung eventuell induzierten Alternanz, **dadurch gekennzeichnet, dass** man wenigstens eine Verbindung der Formel I und 2-Chlorethylphosphonsäure im Gemisch oder getrennt, gleichzeitig oder nacheinander in Form einer wässrigen Spritzbrühe auf Kernobst-Pflanzen oder -Pflanzenteile aufbringt.

## Claims

1. The use of at least one compound of the formula I, 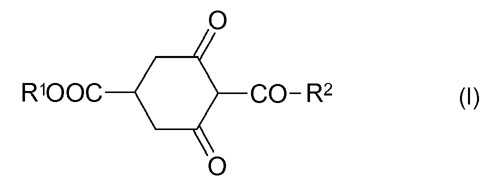 in which
R¹ is H or C₁-C₁₀-alkyl and
R² is C₁-C₁₀-alkyl or C₃-C₁₀-cycloalkyl,
or salts thereof together with 2-chloroethylphosphonic acid (ethephon) for the treatment of pome fruit for preventing the reduced floral development which is observed in the year after the treatment owing to treatment with compounds of the formula I, and for preventing biennial bearing which may be induced by the treatment.

2. The use according to claim 1 for the treatment of apples or pears.

3. The use according to any of the preceding claims, where, in the compound of the formula I, R¹ is H and R² is ethyl or where the compound of the formula I in which R² is ethyl is present in the form of the calcium salt.

4. The use according to either of claims 1 and 2, where, in the compound of the formula I, R¹ is ethyl and R² is cyclopropyl.

5. The use according to any of the preceding claims, wherein the compound of the formula I and 2-chloroethylphosphonic acid are employed in a weight ratio of from 10:1 to 1:5.

6. The use according to any of the preceding claims, wherein the compound of the formula I and 2-chloroethylphosphonic acid are employed as a mixture in the form of an aqueous spray mixture in which the compound of the formula I and 2-chloroethylphosphonic acid are present in a total amount of from 50 to 1 000 ppm.

7. The use according to any of the preceding claims, wherein the application rate of the compound of the formula I and of 2-chloroethylphosphonic acid is in the range of from in each case 25 to 1 500 g/ha per season.

8. A method for the treatment of pome fruit for preventing the reduced floral development which is observed in the year after the treatment owing to treatment with compounds of the formula I, and for preventing biennial bearing which may be induced by the treatment, which comprises applying at least one compound of the formula I and 2-chloroethylphosphonic acid, as a mixture or separately, to pome fruit plants or parts of pome fruit plants in the form of an aqueous spray mixture, either simultaneously or in succession.

## Revendications

1. Utilisation d'au moins un composé de la formule I : 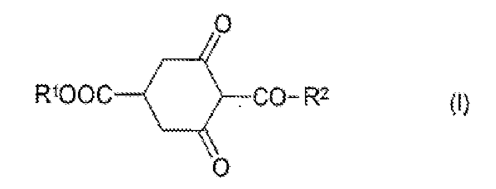 dans laquelle
R¹ représente H ou un groupe alkyle en C₁-C₁₀, et
R² représente un groupe alkyle en C₁-C₁₀ ou cycloalkyle en C₃-C₁₀,
ou de leurs sels conjointement avec de l'acide 2-chloroéthylphosphonique (Ethephon), pour le traitement de pomacées pour empêcher la réduction de la floraison observée au cours de l'année qui suit le traitement par le traitement avec des composés de la formule I et une alternance induite éventuellement par le traitement.

2. Utilisation suivant la revendication 1, pour le traitement des pommes ou des poires.

3. Utilisation suivant l'une des revendications précédentes, dans laquelle, dans le composé de la formule I, R¹ représente H et R² de l'éthyle ou dans laquelle le composé de la formule I, où R2 représente de l'éthyle, se présente sous la forme du sel de calcium.

4. Utilisation suivant l'une des revendications 1 ou 2, dans laquelle, dans le composé de la formule I, R¹ représente de l'éthyle et R² du cyclopropyle.

5. Utilisation suivant l'une des revendications précédentes, dans laquelle le composé de la formule I e t l'acide 2-chloroéthylphosphonique sont mis en oeuvre dans un rapport pondéral de 10/1 à 1/5.

6. Utilisation suivant l'une des revendications précédentes, dans laquelle le composé de la formule I et l'acide 2-chloroéthylphosphonique sont mis en oeuvre en mélange sous la forme d'un bouillon aqueux à pulvériser dans lequel le composé de la formule I et l'acide 2-chloroéthylphosphonique sont contenus en une quantité totale de 50 à 1000 ppm.

7. Utilisation suivant l'une des revendications précédentes, dans laquelle la quantité appliquée du composé de la formule I et de l'acide 2-chloroéthylphosphonique est de l'ordre de chaque fois 25 à 1500 g/ha par saison.

8. Procédé de traitement de pomacées pour empêcher la réduction de la floraison observée au cours de l'année qui suit le traitement par le traitement avec des composés de la formule I et une alternance induite éventuellement par le traitement, **caractérisé en ce qu'**on applique sur des plantes ou parties de plantes à pomacées au moins un composé de la formule I et de l'acide 2-chloroéthylphosphonique en mélange ou séparément, simultanément ou successivement, sous la forme d'un bouillon aqueux à pulvériser.
